(19) Europäisches Patentamt
European Patent Office
Office européen des brevets

(11) Veröffentlichungsnummer: **0 113 127**
**B1**

(12) # EUROPÄISCHE PATENTSCHRIFT

(45) Veröffentlichungstag der Patentschrift: **07.03.90**

(51) Int. Cl.$^5$: **C 08 G 77/24**, C 08 G 77/10

(21) Anmeldenummer: **83113204.8**

(22) Anmeldetag: **29.12.83**

(54) **Verfahren zur Herstellung von Fluoralkylgruppen aufweisendem Diorganopolysiloxan.**

(30) Priorität: **29.12.82 DE 3248546**

(43) Veröffentlichungstag der Anmeldung: **11.07.84 Patentblatt 84/28**

(45) Bekanntmachung des Hinweises auf die Patenterteilung: **07.03.90 Patentblatt 90/10**

(84) Benannte Vertragsstaaten: **BE DE FR GB IT NL**

(56) Entgegenhaltungen:
**DE-A- 2 619 832**
**DE-A- 2 834 172**
**DE-B- 1 165 869**
**FR-A- 1 130 089**
**W. NOLL "Chemie und Technologie der Silicone", 2. Auflage, 1968, Seiten 194-197, Verlag Chemie Gmbh, Weinheim;**

(73) Patentinhaber: **WACKER-CHEMIE GMBH**
**Prinzregentenstrasse 22**
**D-8000 München 22 (DE)**

(72) Erfinder: **Kaufmann, Rudolf, Dr. Dipl.-Chem.**
**Wackerstrasse 5**
**D-8263 Burghausen (DE)**
Erfinder: **Braunsperger, Karl**
**Unterhadermark 86**
**D-8263 Burghausen (DE)**
Erfinder: **Wegehaupt, Karl-Heinrich, Dr. Dipl.-Chem.**
**Marktler Strasse 78**
**D-8263 Burghausen (DE)**
Erfinder: **von Au, Günter, Dr. Dipl.-Chem.**
**Rua Regina Badra 105 Jardim dos Estados**
**04641 Sao Paulo (BR)**

**EP 0 113 127 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von Fluoralkylgruppen und/oder Fluoralkyloxyalkylgruppen aufweisendem Diorganopolysiloxan.

Es ist bereits gemäß DE-OS 26 19 832 bekannt, zur Herstellung von Fluorsilikonpolymeren Katalysatoren aus der Gruppe der quarternären Aminsalze, wie beispielsweise Benzyltrimethylammoniumacetat zu verwenden. Die genannten Amine dienen als Kondensationskatalysatoren für, aus den entsprechenden cyclischen Verbindungen hergestellten tris- bis pentameren Organosiliciumverbindungen. Bei diesen Kondensationsreaktionen treten keine Bindungsumgruppierungen auf.

Weiterhin ist gemäß DE-OS 28 34 172 bereits ein Verfahren zur Herstellung von Fluoralkylgruppen aufweisenden Organopolysiloxanen bekannt, nach dem die Hydrolysate von Fluoralkylgruppen aufweisenden Dichlorsilanen cyclisiert und die Cyclen anschließend in Gegenwart von KOH oder Kaliumsilanolat äquilibriert werden.

Aufgabe der Erfindung war es, ein Verfahren zur Herstellung von Fluoralkylgruppen aufweisendem Diorganopolysiloxan zu finden, bei dem auf den jeweils zusätzlichen Reaktionsschritt einer Cyclisierungsreaktion verzichtet werden kann.

Es wurde nun gefunden, daß Hydrolysate bzw. Co-Hydrolysate von Fluoralkylgruppen aufweisenden Dichlorsilanen in Gegenwart einer Auswahl von Ammoniumhydroxyden äquilibriert werden können, ohne daß ein Cyclisierungsschritt in der Reaktionsfolge erforderlich wäre.

Gegenstand der Erfindung ist ein Verfahren zur Herstellung von Fluoralkylgruppen und/oder Fluoralkyloxyalkylgruppen aufweisendem Diorganopolysiloxan durch

a) Hydrolyse bzw. Co-Hydrolyse von mindestens einem oder mehrerer Silane der Formel

$$R^1R^2SiCl_2$$

wobei
$R^1$ für einen Alkylrest mit 1 bis 6 Kohlenstoffatomen und einen Phenylrest steht,
$R^2$ einen $R_F—CH_2—CH_2$-Rest bedeutet, wobei $R_F$ für einen linearen oder verzweigten, perfluorierten Rest mit 1 bis 12 Kohlenstoffatomen steht und $R^2$ ferner einen Fluoralkyloxyalkylrest der Formel

$$C_nR^3_{2n+1}OR^4$$

bedeutet, wobei
$R^3$ für Wasserstoff und Fluor,
$R^4$ für einen zweiwertigen, aliphatischen Rest mit 2 bis 6 Kohlenstoffatomen steht und
n eine ganze Zahl von 1 bis 6 bedeutet und

b) Äquilibrieren zumindest des Hydrolysats gemäß a),
das dadurch gekennzeichnet ist, daß die Äquilibrierungsreaktion durchgeführt wird in Gegenwart von Verbindungen der Formel

$$[R^5_3R^6N]\,OH$$

wobei
$R^5$ Alkylgruppen mit 1 bis 4 Kohlenstoffatomen und
$R^6$ die gleiche Bedeutung wie $R^5$ hat und ferner für den Benzylrest steht.

Die als Ausgangsverbindungen einzusetzenden Dichlorsilane der Formel $R^1R^2SiCl_2$ sind an sich bekannte Verbindungen. Beispiele für $R^1$ sind die Methyl-, Ethyl-, n-Propyl-, iso-Propyl-, n-Butyl-, n-Pentyl-, n-Hexyl- und die Phenylgruppe.

Spezielle Beispiele für $R^2$, wobei $R^2$ für den $R_F—CH_2—CH_2$-Rest steht, sind die Perfluormethyl-ethyl-, Perfluorethyl-ethyl-, (Perfluor-n-propyl)-ethyl-, (Perfluor-iso-propyl)-ethyl-, (Perfluor-n-butyl)-ethyl-, (Perfluor-iso-butyl)-ethyl-, (Perfluor-tert.-butyl)-ethyl-, (Perfluor-n-pentyl)-ethyl-, (Perfluor-iso-pentyl)-ethyl, (Perfluor-neo-pentyl)-ethyl-, Perfluorhexyl-ethyl-, Perfluorheptyl-ethyl-, Perfluoroctyl-ethyl-, Perfluornonyl-ethyl-, Perfluordecyl-ethyl-, Perfluorundecyl-ethyl-, Perfluordodecyl-ethyl-gruppe. Weitere Beispiele für $R^2$ sind Fluoralkyloxyalkyreste der Formel

$$C_nR^3_{2n+1}OR^4$$

wobei n vorzugsweise die Werte 2 und 3 annimmt, wie der 1.1.2.2-Tetrafluorethyloxyethyl-, der 1.1.2.2-Tetrafluorethyloxypropyl-, der 1.1.2.2-Tetrafluorethyloxybutyl-, der 1.1.2.2-Tetrafluorethyloxypentyl-, der 1.1.2.2-Tetrafluorethyloxyhexyl-, der 1.1.1.2.3.3-Hexafluorpropyloxyethyl-, der 1.1.1.2.3.3-Hexafluorpropyloxypropylrest.

Die erfindungsgemäß einzusetzenden Äquilibrierungskatalysatoren werden durch die Formel

$$[R^5_3R^6N]\,OH$$

wiedergegeben. Beispiele für Substituenten $R^5$ sind die Methyl-, Ethyl-, Propyl- und die Butylgruppe. Für $R^6$ kommt neben den für $R^5$ gegebenen Beispielen zusätzlich der Benzylrest in Betracht. Spezielle Beispiele für erfindungsgemäß einzusetzende Äquilibrierungskatalysatoren sind Tetramethylammoniumhydroxyd, Tetraethylammoniumhydroxyd, Tetrapropylammoniumhydroxyd, Tetrabutylammoniumhydroxyd, Benzyltrimethylammoniumhydroxyd, Benzyltriethylammoniumhydroxyd, Benzyldimethylethylammoniumhydroxyd.

Im Rahmen der Erfindung liegt sowohl die Hydrolyse einer einzigen Silanspezies, als auch die gleichzeitige Hydrolyse (Co-Hydrolyse) verschiedener Silane. Ferner soll unter dem Begriff der Co-Hydrolyse ein auch als « Gradientenhydrolyse » bezeichnetes Vorgehen umfaßt werden, bei dem Hydrolysate bzw. Co-Hydrolysate in einer weiteren Hydrolysereaktion mit einem weiteren Silan cohydrolysiert werden. Für den Fall der Co-Hydrolyse und insbesondere im speziellen Fall der Gradientenhydrolyse können neben Fluoralkyl- bzw. Fluoralkyloxyalkylgruppen aufweisenden Silanen auch solche Silane der Formel

$$R^1R^7SiCl_2$$

mitverwendet werden, wobei $R^1$ die vorstehend gegebene Bedeutung besitzt und $R^7$ gleich $R^1$ ist und ferner Wasserstoff und Alkenylgruppen mit 2 bis 6 Kohlenstoffatomen sein kann.

Beispiele für derartige Alkenylgruppen mit 2 bis 6 Kohlenstoffatomen ist die Vinyl-, die Allyl-, die But-l-enyl, die Pent-l-enyl- und die Hex-l-enyl-gruppe.

Die Hydrolyse bzw. Co-Hydrolyse wird bevorzugt im wäßrigen System durchgeführt. Es können sowohl reines Wasser als auch wäßrige, etwa bis zu 30 Gew.-%-ige Alkalihydroxydlösungen eingesetzt werden. Die alkalische Hydrolyse bewährt sich insbesondere zur Herstellung von Hydrolysaten, die zu hochpolymeren Organopolysiloxanen umgesetzt werden. Zweckmäßigerweise wird das wäßrige System vorgelegt und das Silan bzw. das Silangemisch unter Rühren zudosiert. Bei der Gradientenhydrolyse erfolgt die Zudosierung der zu hydrolysierenden Silane in zeitlichem Abstand. Zum Schluß wird mit heißem Wasser gewaschen. Danach werden die Phasen getrennt.

Als Hydrolysate bzw. Co-Hydrolysate werden typischerweise in den endständigen Einheiten Hydroxylgruppen aufweisende, Fluoralkyl- und/oder Fluoralkyloxyalkylgruppen enthaltende Diorganopolysiloxane erhalten mit durchschnittlich 3 bis 100 Diorganosiloxaneinheiten.

Zur Durchführung der erfindungsgemäßen Äquilibrierungsreaktion wird der Äquilibrierungskatalysator bevorzugt in Mengen von 15 bis 300 Gew.-ppm., insbesondere 50 bis 150 Gew.-ppm., jeweils bezogen auf das Gewicht aller Reaktionsteilnehmer, eingesetzt. Es werden zweckmäßigerweise Reaktionstemperaturen von 80 bis 100 °C eingehalten, wobei vorzugsweise bei vermindertem Druck, insbesondere im Druckbereich von bis 50 Torr gearbeitet wird.

Neben den Fluoralkyl- und/oder Fluoralkyloxyalkylgruppen aufweisenden Hydrolysaten können weiterhin Siloxane mit Siloxaneinheiten der Formel

$$—R^1R^7SiO—$$

im Reaktionsgemisch anwesend sein. Als weitere Reaktionskomponente kommen ferner zur Regelung der Kettenlänge geeignete Organosiliciumverbindungen in Betracht, insbesondere solche der Formel

$$R^7R^1_2SiO(SiR^2_1—O)_m—SiR^1_2R^7$$

wobei m 0 oder eine ganze Zahl von 1 bis 100 ist.

Die Äquilibrierungsreaktionen können, wenn auch der Zusatz von Lösungsmitteln nicht ausgeschlossen ist, ohne Lösungsmittel in Mischern, Knetern und dergleichen durchgeführt werden. Die Umsetzungen nehmen zumeist einen Zeitraum von 0,25 bis 2 Stunden in Anspruch. Danach wird beim Druck der umgebenden Atmosphäre etwa 15 bis 30 Minuten lang auf ca. 15 °C erwärmt, um den Äquilibrierungskatalysator zu zersetzen. Danach werden in der Regel die flüchtigen Bestandteile des Reaktionsgemisches durch Anlegen von vermindertem Druck entfernt.

Es werden homo- oder copolymere Fluoralkyl- und/oder Fluoralkyloxyalkylgruppen aufweisende Organosiliciumverbindungen im Viskositätsbereich von 10 bis 200.000.000 mPa.s erhalten.

Nach dem erfindungsgemäßen Verfahren ist eine breite Palette von Fluoralkylsilikonen zugänglich. Beispiele hierfür sind Fluoralkylsilikonöle, die als Grundlage für Schmierstoffe und als Antischaummittel dienen. Ebenso sind Vorprodukte für Fluoralkylsilikonelastomere zugänglich. Dabei besitzt das erfindungsgemäße Verfahren insbesondere den Vorteil, daß auf den aufwendigen Cyclisierungsschritt, einschließlich der Crackreaktion der Hydrolysate zu cyclischen Verbindungen und die danach erforderliche destillative Aufarbeitung des Cyclengemisches, verzichtet werden kann.

Die Erfindung wird nun anhand von Beispielen näher erläutert:

## Beispiel 1

a) In einem 4 l fassenden 3-Halskolben mit Rührer wurden 1,18 kg 15 Gew.%-ige Natronlauge vorgelegt und unter Rühren innerhalb von 2 Stunden 922 g (2 Mol) [Perfluor-(n-hexyl)-ethyl]-methyl-dichlorsilan zugetropft. Nach weiteren 15 Minuten wurden die Phasen getrennt und das Hydrolysat mit heißem Wasser neutralgewaschen.

Die Ausbeute betrug 748 g

$n_D^{25}$ = 1,3420, Viskosität : 520 mPa.s.

b) In einen evakuierbaren Laborkneter mit 500 ml Nutzinhalt wurden 162,4 g Hydrolysat gemäß a), 65 g eines in den endständigen Einheiten je eine OH-Gruppe aufweisenden Dimethylpolysiloxans mit einer Viskosität von 100 mPa.s, 10 g eines in den endständigen Einheiten je mit einer Trimethylsiloxigruppe endblockierten, 7 Dimethylsiloxigruppen aufweisenden Silikonöls, 0,125 g Benzyltrimethylammoniumhydroxyd, formuliert als 40 %-ige methanolische Lösung, gebracht und auf 100 °C erwärmt. Die Reaktionsmischung wurde nach Erreichen dieser Temperatur noch 10 Minuten lang geknetet. Danach wurde auf 3 Torr evakuiert. Nach weiteren 2 Stunden Reaktionszeit war die Reaktion beendet, wobei das ursprünglich trübe Gemisch in eine klare Flüssigkeit überging. Danach wurde auf Normaldruck entspannt und auf 150 °C erhitzt. Nach weiteren 30 Minuten wurde nochmals auf 12 Torr evakuiert, um flüchtige Bestandteile abzuziehen. Es verblieben in einer Ausbeute von 225 g ein klares Öl.

$n_D^{25}$ = 1,3628, Viskosität : 1 044 mPa.s.

## Beispiel 2

a) Von einem Ansatz aus

1 330 g 15 Gew.%-iger Natronlauge

230,5 g (0,5 Mol) Perfluorhexylethyl-methyl-dichlorsilan

273 g (1 Mol) Tetrafluorethoxypropyl-methyl-dichlorsilan

129 g (1 Mol) Dimethyldichlorsilan

wurde durch gleichzeitiges Zudosieren der obengenannten Silane analog Beispiel 1 a) ein Co-Hydrolysat erhalten. Die Ausbeute betrug 445 g.

$n_D^{25}$ = 1,3730, Viskosität : 150 mPa.s.

Danach wurde analog Beispiel 1 b) der folgende Ansatz äquilibriert :

481,5 g Co-Hydrolysat gemäß 2 a)

18,5 g eines in den endständigen Einheiten mit Trimethylsiloxigruppen endblockierten, 15 Dimethylsiloxigruppen aufweisenden Silikonöls,

0,1 ml einer 20 Gew.%-igen methanolischen Lösung von Tetramethylammoniumhydroxid (entsprechend ca. 50 ppm)

Es wurde in einer Ausbeute von 470 g ein klares Öl erhalten.

$n_D^{25}$ = 1,3810, Viskosität : 4 423 mPa.s.

## Beispiel 3

a) Analog der Arbeitsweise gemäß Beispiel 1 a) wurden 2 130 g 15 Gew.%-ige Natronlauge vorgelegt und ein Silangemisch aus

546 g (2 Mol) Tetrafluorethoxypropyl-methyl-dichlorsilan und

258 g (2 Mol) Dimethyldichlorsilan

zudosiert. Die Ausbeute an Co-Hydrolysat betrug 225 g.

$n_D^{25}$ = 1,3915, Viskosität : 91 mPa.s.

b) Es wurde analog der Arbeitsweise gemäß Beispiel 1 b) folgender Ansatz äquilibriert :

320,5 g Co-Hydrolysat gemäß 3 a)

12 g eines mit Trimethylsiloxigruppen endblockierten, 15 Dimethylsiloxigruppen aufweisenden Silikonöls

0,1 ml einer 20 Gew.%-igen methanolischen Lösung von Tetramethylammoniumhydroxid (entsprechend 60 ppm)

Es wurden 213 g eines klaren Öls erhalten.

$n_D^{25}$ = 1,3919, Viskosität : 5 600 mPa.s.

## Beispiel 4

Es wurde folgender Ansatz äquilibriert :

198,3 g Hydrolysat gemäß Beispiel 1 a)

180 g eines in den endständigen Einheiten je eine Hydroxylgruppe aufweisenden Dimethylpolysiloxans mit einer Viskosität von 100 mPa.s

0,8 g eines mit Trimethylsiloxigruppen endblockierten, 4 Dimethylsiloxi und eine Vinylmethylsiloxigruppe aufweisenden Silikonöls

0,5 g eines in den endständigen Einheiten je eine Vinylgruppe aufweisenden Dimethylpolysiloxans mit 98 Dimethylsiloxigruppen

0,025 ml einer 20 Gew.%-igen methanolischen Lösung von Tetramethylammoniumhydroxid (entsprechend 15 ppm).

Es wurde in einer Ausbeute von 315 g ein klares Festpolymer erhalten.
$n_D^{25}$ = 1,3710, Brabenderplastizität : 370 kp

Beispiel 5

a) Es wurde in einer Arbeitsweise analog Beispiel 1 a) durch Vorlegen von 160 g 20 Gew.%-iger Natronlauge und gleichzeitigem Zudosieren des folgenden Silangemisches
760 g (3,6 Mol) Trifluorpropyl-methyl-dichlorsilan
51,6 g (0,4 Mol) Dimethyldichlorsilan
in einer Ausbeute von 543 g ein Co-Hydrolysat gewonnen.
$n_D^{25}$ = 1,3793, Viskosität : 240 mPa.s.
b) In einer Arbeitsweise analog Beispiel 1 b) wurde folgender Ansatz äquilibriert :
300 g Co-Hydrolysat gemäß 5 a)
1,5 g eines mit Trimethylsiloxigruppen endblockierten, 4 Dimethylsiloxigruppen und eine Vinylmethylsiloxigruppe aufweisenden Silikonöls
0,5 g eines in den endständigen Einheiten je eine Vinylgruppe aufweisenden, 98 Dimethylsiloxigruppen aufweisenden Dimethylpolysiloxans
0,08 ml einer 40 Gew.%-igen methanolischen Lösung von Benzyltrimethylammoniumhydroxyd (entsprechend 100 ppm)
Es wurde in einer Ausbeute von 285 g ein klares Festpolymer erhalten.
$n_D^{25}$ = 1,3802, Brabenderplastizität : 480 kp.

**Patentansprüche**

1. Verfahren zur Herstellung von Fluoralkylgruppen und/oder Fluoralkyloxyalkylgruppen aufweisendem Diorganopolysiloxan durch
a) Hydrolyse bzw. Co-Hydrolyse von mindestens einem oder mehrerer Silane der Formel

$$R^1R^2SiCl_2$$

bedeutet, wobei
$R^1$ für einen Alkylrest mit 1 bis 6 Kohlenstoffatomen und einen Phenylrest steht,
$R^2$ einen $R_F—CH_2—CH_2$-Rest bedeutet, wobei $R_F$ für einen linearen oder verzweigten, perfluorierten Rest mit 1 bis 12 Kohlenstoffatomen steht und $R^2$ ferner einen Fluoralkyloxyalkylrest der Formel

$$C_nR^3_{2n+1}OR^4$$

wobei
$R^3$ für Wasserstoff und Fluor,
$R^4$ für einen zweiwertigen, aliphatischen Rest mit 2 bis 6 Kohlenstoffatomen steht und
n eine ganze Zahl von 1 bis 6 bedeutet und
b) Äquilibrieren zumindest des Hydrolysats gemäß a), dadurch gekennzeichnet, daß die Äquilibrierungsreaktion durchgeführt wird in Gegenwart von Verbindungen der Formel

$$[R^5_3R^6N]\,OH$$

wobei
$R^5$ für Alkylgruppen mit 1 bis 4 Kohlenstoffatomen und
$R^6$ die gleiche Bedeutung wie $R^5$ hat und ferner für den Benzylrest steht.
2. Verfahren nach Anspruch 1, dadurch gekennzeichnet, daß die Verbindungen der Formel

$$[R^5_3R^6N]\,OH$$

in Mengen von 15 bis 300 Gew. ppm., bezogen auf das Gewicht aller Reaktionsteilnehmer, eingesetzt werden.

**Claims**

1. Process for the manufacture of a diorganopolysiloxane containing fluoroalkyl groups and/or fluoroalkyloxyalkyl groups by
a) hydrolysis or co-hydrolysis of at least one or more silanes of the formula

$$R^1R^2SiCl_2$$

represents, (sic) in which

$R^1$ represents an alkyl radical having from 1 to 6 carbon atoms and a phenyl radical,

$R^2$ represents an $R_F—CH_2—CH_2—$ radical, wherein $R_F$ represents a linear or branched, perfluorinated radical having from 1 to 12 carbon atoms, and

$R^2$ also represents a fluoroalkyloxyalkyl radical of the formula

$$C_nR^3_{2n+1}OR^4$$

wherein

$R^3$ represents hydrogen and fluorine,

$R^4$ represents a divalent aliphatic radical having from 2 to 6 carbon atoms, and

n represents an integer from 1 to 6,

and

b) equilibration at least of the hydrolysate according to a), characterised in that the equilibration reaction is carried out in the presence of compounds of the formula

$$[R^5_3R^6N]\,OH$$

in which

$R^5$ represents alkyl groups having from 1 to 4 carbon atoms,

and

$R^6$ has the same meaning as $R^5$ and also represents the benzyl radical.

2. Process according to claim 1, characterised in that the compounds of the formula

$$[R^5_3R^6N]\,OH$$

are used in amounts of from 15 to 300 p.p.m. by weight, calculated on the weight of all reactants.

**Revendications**

1. Procédé pour préparer un poly-diorganoxiloxane contenant des radicaux fluoralkyles et/ou des radicaux fluoralkyloxy-alkyles par :

a) hydrolyse ou co-hydrolyse d'un ou plusieurs silanes répondant à la formule :

$$R^1R^2SiCl_2$$

dans laquelle :

$R^1$ représente un radical alkyle contenant de 1 à 6 atomes de carbone ou un radical phényle,

$R^2$ représente un radical $R_F—CH_2—CH_2—$ dans lequel $R_F$ désigne un radical perfluoré linéaire ou ramifié contenant de 1 à 12 atomes de carbone, ou $R^2$ représente un radical fluoralkyloxy-alkyle de formule :

$$C_nR^3_{2n+1}OR^4$$

dans lequel :

$R^3$ représente l'hydrogène ou le fluor,

$R^4$ représente un radical aliphatique bivalent contenant de 2 à 6 atomes de carbone et

n désigne un nombre entier de 1 à 6, et

b) équilibrage au moins de l'hydrolysat selon a), procédé caractérisé en ce qu'on effectue la réaction d'équilibrage en présence de composés répondant à la formule :

$$[R^5_3R^6N]\,OH$$

dans laquelle :

les $R^5$ représentent des radicaux alkyles contenant de 1 à 4 atomes de carbone, et

$R^6$ a la même signification que $R^5$ ou représente le radical benzyle.

2. Procédé selon la revendication 1 caractérisé en ce que les composés de fomule :

$$[R^5_3R^6N]\,OH$$

sont mis en jeu en des quantités de 15 à 300 ppm en poids par rapport au poids de tous les corps participant à la réaction.